# EUROPEAN PATENT SPECIFICATION

(11) **EP 2 962 604 B1**
(45) Date of publication and mention of the grant of the patent: **06.09.2017**
(21) Application number: 14175832.6
(22) Date of filing: 04.07.2014
(51) Int. Cl.: A47C 27/12, B68G 7/04, B68G 15/00, B60N 2/70

(54) **Apparatus and method of producing a seat cushion body**
Vorrichtung und Verfahren zur Herstellung eines Sitzkissenkörpers
Dispositif et procédé de production d'un corps de coussin de siège

(43) Date of publication of application: 06.01.2016
(73) Proprietor: Schukra Gerätebau GmbH, 2560 Berndorf (AT)
(72) Inventor: Kristo, Darko, 2524 Teesdorf (AT); Könczöl, Georg, 1220 Wien (AT); Petzel, Jan, 72074 Tübingen (DE)
(74) Representative: Banzer, Hans-Jörg

(56) References cited:
- EP-A1- 2 417 876
- JP-A- 2001 159 061

## Description

### FIELD OF THE INVENTION

Embodiments of the invention relate to an apparatus for producing a seat cushion body and to a method of producing a seat cushion body. Embodiments of the invention relate in particular to an apparatus for producing a seat cushion body from a fiber material and to a method of producing a seat cushion body from a fiber material.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

There are drawbacks to using polyurethane foam as cushioning material for seats. For example, the polyurethane foam backed material can emit volatile materials which contribute to 'fogging' of vehicle or housing interiors, and the foam itself may oxidize over time leading to a color change in the material. Recyclability is also an issue which has to be addressed.

For these and other reasons, there is a continued need for another material that would provide cushion properties similar to the ones of foam materials at similar costs. One class of materials which has received attention in this regard is nonwovens, for example polyester nonwovens. These materials can provide a suitable backing to many face fabrics. Methods of producing seat cushion bodies from fiber material are disclosed in EP 2 417 876 A1, EP 2 008 549 A1, or EP 2 002 760 A2, for example.

Conventional techniques for producing seat cushion bodies from fiber material frequently use bales of fiber material. The bales are of fiber material may be opened and the fibers included therein may be provided in the form of flocks of fibers or in the form of isolated fibers to an apparatus for producing the seat cushion bodies. These processes may add significantly to the number of man working hours required for operating the apparatus, may make it difficult to reproducibly control the fraction of different fiber materials which are supplied to a mold, and may add to the amount of fiber material which is wasted during the manufacturing process.

An apparatus according to the preamble of claim 1 is known from JP 2001-159061 A.

### BRIEF SUMMARY OF THE INVENTION

In view of the above, there is a continued need in the art for an apparatus for producing a seat cushion body and a method of producing a seat cushion body which address some of the above needs. There is in particular a need in the art for an apparatus for producing a seat cushion body and a method of producing a seat cushion body in which the produced seat cushion body offers weight advantages over existing PU foam cushion bodies, provides good breathability and ventilation, and in which the amount of human work required for feeding fiber material may be reduced.

According to the invention, these and other needs are addressed by an apparatus according to claim 1 and a method according to claim 12 in which the fiber material is produced from one or more yarns. The one or more yarns is cut into segments to produce the fiber material which may be thermally activated to form the seat cushion body.

The fiber material may be produced in a batch-wise process. A batch of fiber material may be produced to fill a mold so as to produce respectively one seat cushion body. The cutting operation may be interrupted when a mold has been filled and may be continued to produce a new seat cushion body once the seat cushion body has been removed from the mold and the mold is ready for receiving further fiber material.

By integrating the production of the fiber material, which is performed by cutting one or several yarns into segments and opening the segments into the constituent filaments, into the apparatus for forming the seat cushion body it is not longer required to open bales of fiber material. The human workload required in operating the apparatus may be reduced.

According to the invention, an apparatus for producing a seat cushion body from a fiber material is provided. The apparatus comprises a cutter system configured to cut at least one yarn to produce the fiber material. The apparatus comprises a transport system configured to transport the fiber material from the cutter system to a mold.

The production and transport of the fiber material from the cutter system to the mold may thereby be integrated into the apparatus. The apparatus is operative to operate with yarn(s) as raw material and to process the yarn(s) to produce the fiber material.

The apparatus may comprise a yarn supply device. The yarn supply device may comprise at least one spool of yarn. The yarn may be played out by the yarn supply device.

The cutter system is configured to cut the at least one yarn to produce matrix fibers and binding fibers. The binding fibers are configured to be thermally activated in the mold. The fiber cushion body may thereby be produced from at least two different fibers. The matrix fibers can contribute to the structural stability and resilient characteristics. The binding fibers can provide thermal cross-linking to form an integral seat cushion body when the binding fibers are thermally activated.

The at least one yarn comprises a first filament and a second filament. The cutter system is configured to produce segments of the first filament and segments of the second filament by cutting the at least one yarn to produce the matrix fibers and the binding fibers. The segments of the first filament may form the matrix fibers. The segments of the second filament may form the binding fibers.

A yarn comprises both the first filament and the second filament. The first filament and the second filament may be included in the yarn in a pre-defined ratio. For illustration, a ratio of a mass per length of the first filament from which the matrix fibers are formed and a mass per length of the second filament from which the binding fibers are formed may be in a range from 1 to 1,3.

Each yarn of the at least one yarn respectively comprises both the first filament and the second filament.

The first filament and the second filament are distinguished from each other in one or several of material, diameter, and/or cross-sectional shape. The first material from which the matrix fibers are formed may be a trilobal filament. The second material from which the binding fibers are formed may have a round cross section. The second material from which the binding fibers are formed may have a core and a coating, with the coating melting at a lower temperature than the core.

The yarn(s) may respectively be an endless yarn formed from staple fibers. The yarn(s) may respectively be an endless yarn formed from endless filaments.

The yarn supply device may comprise an enclosure for housing the yarn(s). The yarn supply device may comprise an atmosphere control device for controlling an air humidity and/or a temperature of an atmosphere within the enclosure.

The yarn supply device may comprise channels in fluid communication with the atmosphere to guide the yarn(s) played out by the yarn supply device towards the cutter system. The channels may be tubes and may be configured for maintaining the atmosphere prevailing within the enclosure also in an interior of the tubes. The channels may thereby limit the amount of time for which each yarn is exposed to ambient conditions which cannot be controlled in the same way as the atmosphere within the enclosure of the yarn supply device.

The cutter system may be configured to cut the at least one yarn into segments of at least two different lengths to produce the fiber material. The lengths may be varied in a time-dependent manner to introduce a gradient in fiber lengths in the seat cushion body. The lengths may be varied in an open or closed loop control I

The transport system may be configured to generate an air stream which transports the fiber material away from the cutter system. The transport system may comprise at least one ventilator for producing the air stream which transports the fiber material away from the cutter system.

The transport system may be configured to produce a laminar air flow which transports the fiber material from the cutter system into the mold. The transport system may be configured such that no mechanically moving components are required on which the fibers abut for being transported from the cutter system to the mold.

The transport system may be configured to separate filaments of a yarn segment cut from the at least one yarn in the air stream. The transport system may be configured to generate a laminar or turbulent flow region in which the yarn segment cut from the at least one yarn is opened into at least two filaments.

The transport system may be configured to generate the air stream such that it flows from the cutter system into the mold.

The transport system may be configured to orient the fiber material in the mold by controlling the air stream.

The apparatus may comprise a control device configured to control the cutter system to produce the fiber material in batches.

The control device may be configured such that a batch of the fiber material corresponds to an amount of fiber material inserted into the mold to form one seat cushion body.

The control device may be configured to temporarily prevent the cutter system from cutting the at least one yarn after a batch of the fiber material has been produced by the cutter system.

The apparatus may comprise a heating system configured to heat the fiber material in the mold to thermally activate at least a portion of the fibers of the fiber material.

According to the invention, the method of producing a seat cushion body from fiber material comprises cutting at least one yarn by a cutter system to produce the fiber material, and transporting the fiber material from the cutter system to a mold.

The fiber material may thereby be produced on site from yarn(s) which serve as raw material. It is not required to manually process bales of fiber material for feeding to an apparatus for producing the seat cushion body.

The method may comprise supplying the at least one yarn by a yarn supply device. The yarn supply device may comprise at least one spool of yarn. The yarn may be played out by the yarn supply device.

In the method, the at least one yarn is cut to produce matrix fibers and binding fibers. The binding fibers are configured to be thermally activated in the mold. The fiber cushion body may thereby be produced from at least two different fibers. The matrix fibers can contribute to the structural stability and resilient characteristics. The binding fibers can provide thermal cross-linking to form an integral seat cushion body when the binding fibers are thermally activated.

In the method, the at least one yarn comprises a first filament and a second filament. Segments of the first filament and segments of the second filament are produced by cutting the at least one yarn to produce the matrix fibers and the binding fibers. The segments of the first filament may form the matrix fibers. The segments of the second filament may form the binding fibers.

In the method, a yarn comprises both the first filament and the second filament. The first filament and the second filament may be included in the yarn in a pre-defined ratio. For illustration, a ratio of a mass per length of the first filament from which the matrix fibers are formed and a mass per length of the second filament from which the binding fibers are formed may be in a range from 1 to 1,3. The ratio may be greater than 1,3.

In the method, each yarn of the at least one yarn respectively comprises both the first filament and the second filament.

In the method, the first filament and the second filament may be distinguished from each other in one or several of material, diameter, and/or cross-sectional shape. The first material from which the matrix fibers are formed may be a trilobal filament. The second material from which the binding fibers are formed may have a round cross section. The second material from which the binding fibers are formed may have a core and a coating, with the coating melting at a lower temperature than the core.

In the method, the yarn(s) may respectively be an endless yarn formed from staple fibers. In the method, the yarn(s) may respectively be an endless yarn formed from endless filaments.

The method may comprise controlling an air humidity and/or a temperature of an atmosphere within an enclosure which houses a spool of the at least one yarn.

The method may comprise guiding the at least one yarn through a channel in fluid communication with the atmosphere maintained within the enclosure to guide the yarn(s) towards a cutter system. The channels may be tubes and may be configured for maintaining the atmosphere prevailing within the enclosure also in an interior of the tubes.

In the method, the at least one yarn may be cut into segments of at least two different lengths to produce the fiber material. The lengths may be varied in a time-dependent manner to introduce a gradient in fiber lengths in the seat cushion body. The lengths may be varied in an open or closed loop control.

Transporting the fiber material may comprise generating an air stream which transports the fiber material away from the cutter system.

Transporting the fiber material may comprise generating a laminar air flow which transports the fiber material from the cutter system into the mold. The transport may be implemented such that no mechanically moving components are required on which the fibers abut for being transported from the cutter system to the mold.

The method may comprise separating filaments of a yarn segment cut from the at least one yarn in the air stream. A laminar or turbulent flow region may be generated in which the yarn segment cut from the at least one yarn is opened into at least two filaments.

The air stream may be generated such that it flows from the cutter system into the mold.

The method may comprise orienting the fiber material in the mold by controlling the air stream.

In the method, the fiber material may be produced in batches.

In the method, a batch of the fiber material may correspond to an amount of fiber material inserted into the mold to form one seat cushion body.

The method may comprise temporarily preventing the cutter system from cutting the at least one yarn after a batch of the fiber material has been produced by the cutter system.

The method may comprise the fiber material in the mold to thermally activate at least a portion of the fibers of the fiber material.

The method may be automatically performed by the apparatus according to an embodiment.

The apparatus and method may be used for forming a seat cushion body which has a main load direction and comprises a resilient portion formed from the fiber material. The seat cushion body may be formed such that it has a portion in which a fiber orientation is along the main load direction.

The seat cushion body may be integrated into a vehicle seat, chair, or other sitting or bedding furniture for residential, office, public transportation, or other purposes.

The seat may be a vehicle seat. The seat may be an automobile seat. The seat may be a train seat. The seat may be an aircraft seat.

The method according to embodiments may comprise installing the seat cushion body in a seat. The seat may be an automotive seat.

The method according to embodiments may comprise installing the seat cushion body in a furniture. The furniture may be a home chair or an office chair.

The apparatuses and methods for producing seat cushion bodies according to various aspects and embodiments use yarn(s) as raw material and produce the fiber material from which the seat cushion body is formed.

The apparatuses and methods for producing seat cushion bodies according to various aspects and embodiments may be used for producing seat cushion bodies for various types of seats, including seats for automobiles, aircrafts and trains and seats for office or home seating.

### BRIEF DESCRIPTION OF THE DRAWINGS

Embodiments of the invention will be described with reference to the accompanying drawings in which like reference numerals designate like elements.
FIG. 1 is a schematic view of an apparatus according to an embodiment.
FIG. 2 is a flow chart of a method according to an embodiment.
FIG. 3 is a view of at least one yarn used in an apparatus and method according to an embodiment.
FIG. 4 is a view of at least one yarn used in an apparatus and method according to an embodiment.
FIG. 5 is a view of at least one yarn used in an apparatus and method according to an embodiment.
FIG. 6 is a flow chart of a method according to an embodiment.
FIG. 7 is a cross-sectional view of a fiber cushion body produced by an apparatus or method according to an embodiment.
FIG. 8 is a cross-sectional view of a fiber cushion body produced by an apparatus or method according to an embodiment.

### DESCRIPTION OF EMBODIMENTS

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

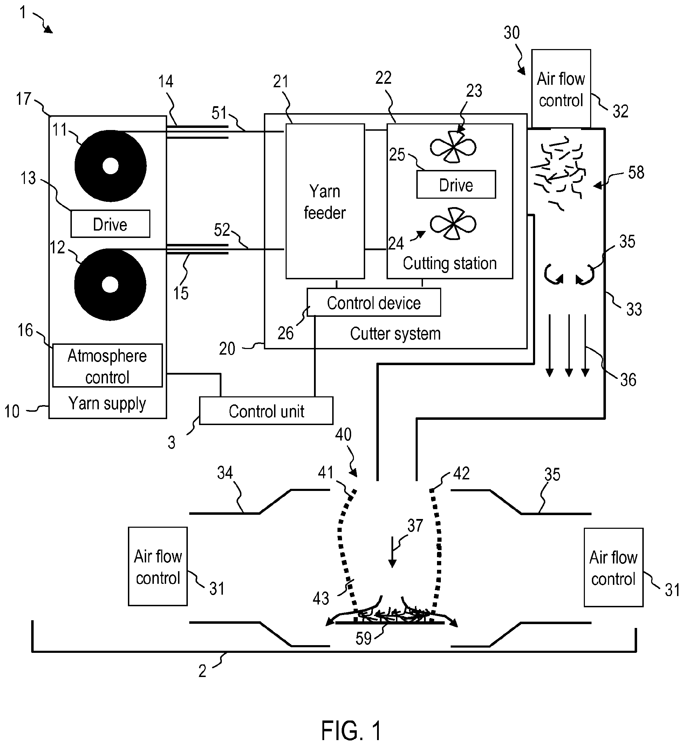

FIG. 1 is a schematic view of an apparatus 1 for producing a seat cushion body. The apparatus 1 uses yarn(s) as raw material, cuts the yarns into segments to produce binding fibers and matrix fibers, and transports the binding fibers and matrix fibers into a mold 40. In the mold 40, at least the binding fibers may be thermally activated. The seat cushion body may thereby be formed as an integral body of cross-linked fibers. Cross-linking may be attained by thermal activation of the binding fibers. The seat cushion body may be formed such that the fibers in at least a portion of the seat cushion body are predominantly oriented along a main load direction of the seat cushion body.

The apparatus 1 comprises a cutter system 20 configured to cut one or more yarns 51, 52 to produce the fiber material from which the seat cushion body is formed. The apparatus 1 comprises a transport system 30 configured to transport the fibers away from cutting blades of the cutter system 20 and into the mold 40.

The apparatus 1 may comprise a yarn supply device 10 configured to supply the one or more yarns 51, 52 to the cutter system 20. The yarn supply device 10 may include one or more spools 11, 12 of yarn. The spools 11, 12 may be formed from the same yarn or from different yarns. The spools 11, 12 may respectively each have an initial weight of several kilograms, e.g. of at least give kilograms. Each spool 11, 12 may be mounted on a rotatably supported which may be driven by a power drive 13 to play out yarn from the spools 11, 12.

The yarn supply device 10 may have an enclosure 17 in which the spool(s) 11, 12 of yarn are housed. Environmental parameters of the yarn when stored within the enclosure 17 may be controlled by an atmosphere control device 16 of the yarn supply device 10. The enclosure 17 has an atmosphere within its interior. The atmosphere control device 16 may be configured to control an air humidity and/or a temperature of the atmosphere within the enclosure 17. By controlling the air humidity and/or the temperature within the enclosure 17, well-defined conditions may be maintained for the yarn 51, 52 so as to ensure that the yarns may be efficiently cut to produce the fiber material from which the seat cushion body is formed. For illustration, a temperature between 20° C and 25 °C, e.g. of 23 °C may be maintained by the atmosphere control device 16 within the enclosure 17. A relative air humidity of between 50 and 60 % may be maintained by the atmosphere control device 16 within the enclosure 17.

The atmosphere control device 16 may be configured to control the air humidity and temperature within the enclosure 17 in which the yarn is stored such that the yarn(s) supplied by the yarn supply device 10 have a material humidity of at least 2,5 %. This has proven to result in seat cushion bodies providing good comfort when the yarn(s) are cut to produce the fiber material.

The yarn supply device 10 may comprise at least one channel 14, 15 which extends towards the cutter system 20. The at least one channel 14, 15 may be in fluid communication with the atmosphere which is maintained within the enclosure of the yarn supply device 10. The at least one channel 14, 15 may be configured as a tube extending from the enclosure 17. The yarn(s) 51, 52 may be guided in the at least one channel 14, 15. The yarn(s) 51, 52 may be conveyed from the yarn supply device to the cutter system 20 through the channels 14, 15 in such a manner that the yarn(s) 51, 52 are exposed to ambient atmosphere for at most a short distance of their transport to cutting blades of the cutter system.

The yarn supply device 10 may be configured to supply the yarn(s) 51, 52 each with a speed of more than 10 m/min, e.g. of at least 100 m/min. For illustration, the yarn supply device 10 may be configured to supply the yarn(s) 51, 52 with a speed of at least 100 m/min and at most 200 m/min. Other supply speeds may be used.

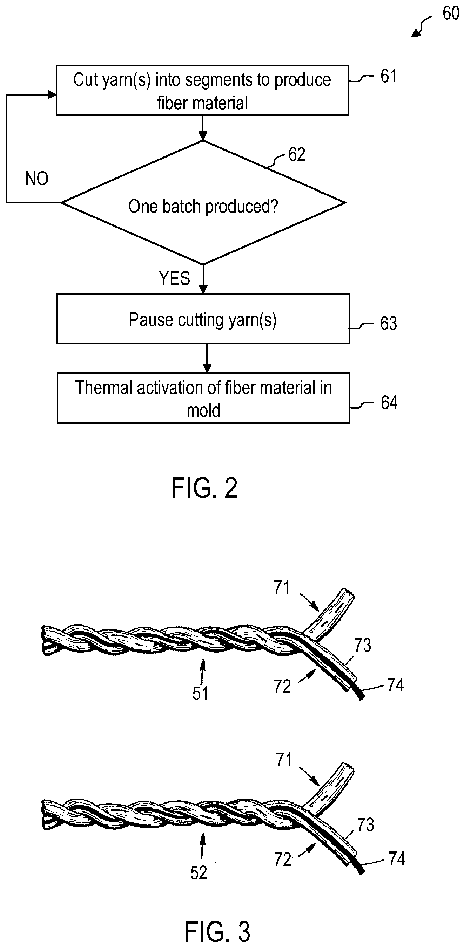

The yarn(s) 51, 52 may respectively be composed of a plurality of filaments. The filaments may be staple fibers or endless filaments. Filaments of different cross-sections, materials and/or diameters may be included in the yarn(s) 51, 52, as will be explained in more detail with reference to FIG. 3 to FIG. 5.

While two yarns 51, 52 and two spools 11, 12 of yarn are shown in FIG. 1, other numbers of yarns may be used. For illustration, at least four yarns may be supplied from the yarn supply device 10 to the cutter system 20. The yarn supply device 10 may be configured to output four or more than four yarns to the cutter system 20. The yarn supply device 10 may be configured to output from four to sixteen yarns to the cutter system 20.

The cutter system 20 is configured to cut the yarns supplied thereto into segments. Both binding fibers and matrix fibers for forming the seat cushion body may be produced by cutting the yarn(s) into segments. At least some of the yarn(s) may consist of a blend of different materials such that segments of a first filament may act as matrix fibers and segments of a second filament may act as matrix fibers.

The cutter system 20 comprises one or more cutting blades 23, 24 for cutting the yarn(s) into segments. For illustration, a rotating cutting blade 23 may be provided for cutting the yarn 51. A cutting head which includes the rotating cutting blade 23 may include a fixed or counter-rotating cutting edge, with the yarn 51 being cut into segments between the rotating cutting blade 23 and the cutting edge. A sensor may be used to measure the forces and/or torques acting onto the cutting blade 23, and operation of the cutting head may be controlled based on the measured forces and/or torques. A further cutting head for cutting the further yarn 52 may comprise a rotating cutting blade 24. The further cutting head may have the same configuration as the cutting head which include the cutting blade 23.

Each cutting head may include a channel for guiding the yarn therethrough. The channel may be configured such that the yarn is advances towards the respective cutting blade 23, 24 by a gas stream. The gas stream is generated by the rotation of the respective cutting blade 23, 24, which gives rise to a pressure difference between the outlet of the channel and the inlet of the channel. The pressure difference establishes a gas stream, which advances the yarn towards the cutting head. The yarn may be advanced towards the respective cutting blade with a speed of more than 10 m/min, e.g. with a speed of at least 100 m/min.

A drive 25 is configured to rotationally drive the cutting blades 23, 24 of the cutter system 20. The drive 25 may be controlled by a control device 26. The control device 26 may control the operation of the cutting blades 23, 24 and operation of a yarn feeder 21 of the cutting station in a coordinated manner. The control device 26 may optionally also control the drive 13 of the yarn supply device 10.

The cutter system 20 may comprise a yarn feeder 21. The yarn feeder 21 may include a transport belt or other transport system which advances the yarn(s) 51, 52 from the output of the yarn supply device 10 to a cutting station 22 which includes the rotating cutter blades 23, 24. The yarn feeder 21 may be configured to receive the yarn(s) 51, 52 at a discharge opening of the tubes 14, 15 and to convey the yarn(s) 51, 52 to the cutting station 22. The yarn feeder 21 may comprise one or several conveyer belts, grippers which grip and advance the yarn(s) 51, 52 or other conveying devices.

The cutter system 20 produces fiber material which is cut from the yarn(s) 51, 52. Yarn segments cut from the yarn(s) 51, 52 may at least partially be opened into segments of their filaments by the cutting action of the cutter system 20. The cutter system may comprise an opening mechanism which opens the yarn segments into their filament segments, so as to produce individual filament segments.

The cutter system 20 may be configured to cut the yarn(s) 51, 52 which have a material humidity of 2,5 % or more. The cutter system 20 may be configured to cut the yarn(s) 51, 52 which are transported at a speed of at least 10 m/min, e.g. with a speed of at least 100 m/min and at most 200 m/min.

The cutter system 20 may be configured to cut the yarn(s) 51, 52 into segments having a length of more than 10 mm. The cutter system 20 may be configured to cut the yarn(s) 51, 52 into segments having a length of at least 10 mm and at most 50 mm. The cutter system 20 may be configured to cut the yarn(s) 51, 52 into segments having a length of at least 15 mm and at most 35 mm. The cutter system 20 may be configured such that the lengths of the segments may be adjusted, thereby producing fiber material with fibers of different lengths. The length of the fibers may be adjusted in a controlled way in dependence on the filling level of the fiber material in the mold 40.

The apparatus 1 comprises a transport system 30 which transports the fiber material from an output of the cutter system 20 into the mold 40. The transport system 30 may have any one of a variety of configurations. For illustration, mechanically moving conveying elements may be used. The transport system 30 may be configured to generate a gas flow, in particular an air flow, to transport the fiber material from an output of the cutter system 20 to the mold 40. The transport system 30 may comprise one or several air flow control devices 31, 32 which are operative to establish an air flow from the output of the cutter system 20 to the mold 40. Each of the air flow control devices 31, 32 may comprise a ventilator or another actuator which is operative to generate an air flow. An air flow control device 31 may be configured to suction air from an output of the cutter system through a guide channel 33 into the mold 40. The air flow control device 31 may comprise a ventilator which generates a negative pressure at an outlet channel 34, 35 relative to a pressure at the output of the cutter system 20. This provides suction which establishes an air flow which transports the fiber material from the cutter system 20 into the mold 40. The mold 40 may have openings through which the air flow which transports the fiber material may be withdrawn from the mold 40 and may be discharged through outlet channels 34, 35.

The transport system 30 may be configured to establish a laminar air flow 36 in the guide channel 33. An inlet opening of the guide channel 33 may be disposed below the cutting blades 23, 24. An inlet opening of the guide channel 33 may be offset from the cutting blades 23, 24 parallel to the direction in which the yarn(s) is/are supplied to the cutting blades 23, 24. The air flow 36 transports the fiber material away from the cutter system and extends into the mold as air flow 37. In the mold 40, the air flow may be deflected so as to exit the mold through openings in the mold 40. Fibers may be oriented in the mold 40 by this air flow pattern.

The transport system 30 may be configured to assist in separating the cut yarn segments into their constituent filaments. The transport system 30 may generate a flow pattern 38 which assists in separating the cut yarn segments into the segments of their constituent filaments. The transport system 30 may be configured to generate a turbulent or laminar flow field 38 which assists in separating filament segments of the yarn segments from one another. The transport system 30 may comprise one or several mechanical elements arranged in the transport path of the fiber material to assist in separating the cut yarn segments into the segments of the constituent filaments.

The apparatus 1 may comprise a central control unit 3. The central control unit 3 may be interfaced with the control device 26 of the cutter system 20. The central control unit 3 may be interfaced with the yarn supply device 10 and/or the transport system 30. The central control unit 3 may control operation of the yarn supply device 10 and the cutter system 20 in a coordinated manner. The central control unit 3 may control operation of the yarn supply device 10, the cutter system 20, and the transport system 30 in a coordinated manner. The central control unit 3 may have an interface which is connected to a mating interface of the control device 26 of the cutter system 20. The central control unit 3 may directly control one or several actuators of the yarn supply device 10 and/or may directly control movable elements of the transport system 30, e.g. ventilator drives. The central control unit 3 may be interfaced with a control device of the yarn supply device 10 which controls one or several actuators of the yarn supply device 10. The central control unit 3 may be interfaced with a control device of the transport system 30 which controls operation of the transport system 30.

The central control unit 3 may be omitted or may be integrated into one or several of the functional units of the apparatus 1. For illustration, the control device 26 of the cutter system 20 may also perform the functions of the central control unit 3 and may control operation of the yarn supply device 10 and/or the transport system 30 in a manner coordinated with operation of the cutter system 20.

The mold 40 may comprise a plurality of mold segments 41, 42 which are displaceable relative to each other. The mold 40 may comprise a first half mold 41 and a second half mold 42 which define a cavity 43 therebetween. The first half mold 41 and the second half mold 42 may be configured to be displaced relative to one another before the fiber material 59 disposed in the mold 40 is formed into the seat cushion body by thermally activating at least binding fibers of the fiber material.

Thermal heating of the fiber material in the mold 40 may be performed at the location at which the mold 40 is filled with the fiber material by the transport system. The mold 40 may also be displaced for thermal activation of the binding fibers.

The apparatus 1 may be configured such that the fiber material produced by cutting the yarn(s) 51, 52 is transported into the mold 40 without being deposited or stored on the way from the cutter system 20 to the mold 40. The fiber material for filling the mold 40 may be produced on site and as required for filling the fiber material into the mold 40.

The apparatus 1 may be configured to produce the fiber material in batches. The cutter system 20 may interrupt the production of the fiber material after production of a batch has respectively been completed. To this end, the yarn feeder 21 may stop feeding the yarn(s) to the cutting blades 23, 24 of the cutter system 20. Cutting the yarn(s) into segments may be temporarily paused until the fiber material deposited in the mold 40 has been thermally activated and removed from the mold 40. Cutting the yarn(s) into segments may be temporarily paused until the mold 40 is prepared to receive a new batch of fiber material.

The cutter system 20 and the transport system 30 of the apparatus 1 may be combined in one structural unit. For illustration, the apparatus 1 may comprise a frame to which the cutter system 20 and the transport system 30 are attached. A bracket for retaining the mold 40 may be attached to the frame 2 of the apparatus 1. The yarn supply device 10 may also be attached to the frame 2.

FIG. 2 is a flow chart of a method 60 according to an embodiment. The method 60 may be automatically performed by the apparatus 1 according to an embodiment. In the method 60, fiber material is produced by cutting yarns. The filament segments of the cut yarn segments are transported into a mold as fiber material. Once a batch of the fiber material has been produced, the fiber material in the mold may be formed into the seat cushion body which comprises thermal activation of at least a fraction of the fibers.

At 61, a cutter system is operated to cut one or several yarns into segments to produce fiber material.

At 62, it is determined whether one batch of fiber material has been produced. The determining at 62 may be performed in an open loop control. Expiry of a predetermined time interval may be monitored to determine at which time the production of the fiber material is to be interrupted for allowing the fiber material inserted into the mold to be thermally cross-linked. Alternatively, or additionally, a closed loop control may be performed to determine whether one batch of the fiber material has been produced. The length of yarn(s) supplied to the cutters of the cutter system, the amount of fiber material passing through the guide channel 33, and/or the filling level of the mold 40 may be monitored to determine whether one batch of fiber material has been produced.

In the batch-wise production of the fiber material from the yarn(s), one batch may correspond to the amount of fiber material which is inserted into the mold to form one seat cushion body.

The cutting of the yarn(s) into segments may be continued at 61 if it is determined that the batch of fiber material has not yet been produced.

If it is determined that one batch of fiber material has been produced, the method may continue at 63. At 63, the cutting of the yarn(s) may be temporarily halted. The cutting blades of the cutter system 20 may continue to rotate, but the supply of yarn to the cutting blades may be temporarily halted.

At 64, while the cutter system 20 temporarily stops producing new fiber material, the fiber material inserted in the mold 40 may be heated. This causes thermal activation of at least the binding fibers. When the seat cushion body is removed from the mold 40, the method may return to step 61 to produce the next batch of the fiber material.

The various yarns supplied to the cutter system 20 as raw material may have various configurations. When several yarns are supplied to the cutter system 20, each one of the yarns may be identical. Each one of the yarns may consist of a blend of different filaments. The filaments forming the yarns may respectively be endless filaments or staple fiber filaments which are formed in to the yarn.

FIG. 3 illustrates yarns 51, 52 of an apparatus and method according to an embodiment. While two yarns 51, 52 are shown in FIG. 3, more than two yarns may be supplied to the cutter system. The cutter system may have four or more than four cutters, with respectively one yarn being supplied to each one of the cutters.

The yarns 51, 52 have identical configurations. Each one of the yarns 51, 52 may have a mass per length of less than 5000 dtex. Each one of the yarns 51, 52 may have a mass per length of at most 3300 dtex.

Each one of the yarns 51, 52 may be composed of a blend of different filaments. The different filaments may have different cross sections, diameters, and/or materials. The filament(s) of a first filament type may be configured to form matrix fibers when cut into segments. The filament(s) of a second filament type may be configured to form binding fibers when cut into segments. The binding fibers may have a melting temperature which is lower than that of the matrix fibers. When the fiber material is heated in the mold, heating may be performed up to a temperature which is higher than a thermal activation temperature of the binding fibers and lower than a melting temperature of the matrix fibers. This causes the binding fibers to at least partially melt and to form an integral cushion body of thermally cross-linked fibers.

The yarn 51 may comprise a first filament 71 which, when cut into segments, forms the matrix fibers. The yarn 51 may comprise a second filament 72 which, when cut into segments, forms the binding fibers. More than two filaments may be included in the yarn 51.

Filaments of the yarn which are cut to form the matrix fibers may also be referred to as "filaments of the first type". Filaments of the yarn which are cut to form the binding fibers may also be referred to as "filaments of the second type".

The weight of filament(s) of the first type per length may be greater than the weight of second filament(s) of the second type per length. A ratio of the weight of filament(s) of the first type per length to the weight of second filament(s) of the second type per length may be between 1 and 1.3, for example.

A fraction of filaments of the first type in the yarn may be greater than a fraction of filaments of the second type in the yarn. A ratio of the number of filaments of the first type to the number of filaments of the second type may be at least 70 % / 30 %. The ratio of the number of filaments of the first type to the number of filaments of the second type may be 70 % / 30 %. The ratio of the number of filaments of the first type to the number of filaments of the second type may be 75 % / 75 %. The ratio of the number of filaments of the first type to the number of filaments of the second type may be 80 % / 20 %.

The further yarn 52 has a configuration which is identical to that of the first yarn. When more than two yarns are supplied to the cutter system, each yarn may have the configuration explained with reference to the yarn 51.

The first filament 71 may respectively have a round or trilobal cross-section. The second filament 72 may have a bi-component (BiCo) filament. The second filament 72 may have a core 74 and a shell 73 surrounding the core 74. The shell 73 is activated by supplying heat when the yarn 51 is cut into segments and the segments of the second filament 72 form the binding fibers. The segments of the second filaments 72 may provide thermal cross-linking between the matrix fibers formed by the segments of the first filament 71.

By using yarns which each consists of a blend of different filaments which, when cut into segments by the cutter system, form the matrix and binding fibers, respectively, the number of yarns may be adjusted. It is also possible to replace one of the spools of yarn while the other spools still provide yarn to the cutter system, because each cutting blade already outputs a mixture of matrix fibers formed by segments of filaments of the first type and binding fibers formed by segments of filaments of the second type. Supply inventory of the raw material is also facilitated, because the same spools of yarn may be used as raw material for apparatuses having different numbers of cutters.

By cutting each one of the various yarns 51, 52, a blend of matrix fibers and binding fibers can be obtained for inserting into the mold 40. The provision of several yarns reduces the time required for producing one batch.

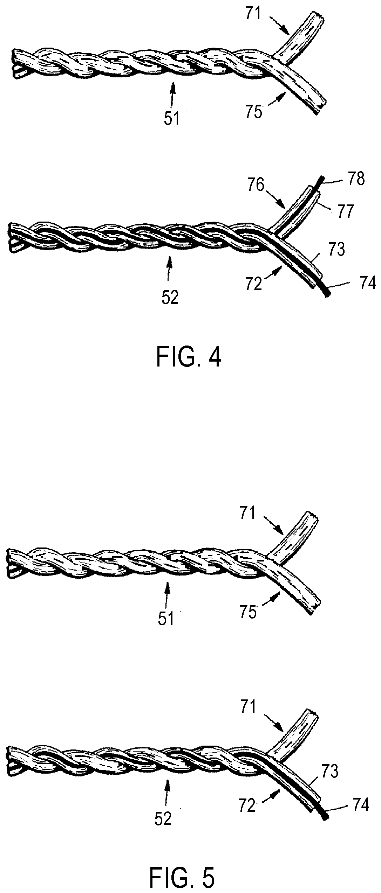

FIG. 4 illustrates yarns 51, 52 of an apparatus and method according to an embodiment. While two yarns 51, 52 are shown in FIG. 3, more than two yarns may be supplied to the cutter system. The cutter system may have four or more than four cutters, with respectively one yarn being supplied to each one of the cutters.

At least two of the yarns 51, 52 have different configurations. One of the yarns, e.g. yarn 51, may be formed of filaments 71, 75 of the first type only. Segments of the filaments 71, 75 form the matrix fibers which are inserted into the mold. Another one of the yarns, e.g. yarn 52, may be formed of filaments 72, 76 of the second type only. Segments of the filaments 71, 75 form the binding fibers which are inserted into the mold. The filaments of the first type and the filaments of the second type may be configured as described with reference to FIG. 4.

The yarns supplied to the cutter system are selected such that the number of filaments of the first type, determined for all yarns supplied to the cutter system, is greater than the number of filaments of the second type, determined for all yarns supplied to the cutter system. A desired blend ratio of matrix fibers to binding fibers may thereby be established. For illustration, a blend ratio of at least 7/3 may be established. The blend ratio may be equal to or greater than 70 % / 30 %. The blend ratio may be equal to or greater than 75 % / 25 %. The blend ratio may be equal to or greater than 80 % / 20 %.

FIG. 5 illustrates yarns 51, 52 of an apparatus and method according to an embodiment. While two yarns 51, 52 are shown in FIG. 3, more than two yarns may be supplied to the cutter system. The cutter system may have four or more than four cutters, with respectively one yarn being supplied to each one of the cutters.

At least two of the yarns 51, 52 have different configurations. One of the yarns, e.g. yarn 51, may be formed of filaments 71, 75 of the first type only. Segments of the filaments 71, 75 form the matrix fibers which are inserted into the mold. Another one of the yarns, e.g. yarn 52, may be formed of filaments of the first type and of filaments of the second type. For illustration, yarn 52 may comprise a filament 71 of the first type which may be identical to the filaments of the yarn 51. Yarn 52 may comprise a filament 72 of the second type which is cut to form the binding fibers.

For the yarns 51, 52 illustrated in FIG. 5, the yarns supplied to the cutter system are selected such that the number of filaments of the first type, determined for all yarns supplied to the cutter system, is greater than the number of filaments of the second type, determined for all yarns supplied to the cutter system. A desired blend ratio of matrix fibers to binding fibers may thereby be established. For illustration, a blend ratio of at least 7/3 may be established. The blend ratio may be equal to or greater than 70 % / 30 %. The blend ratio may be equal to or greater than 75 % / 25 %. The blend ratio may be equal to or greater than 80 % / 20 %.

The apparatuses and methods according to the various embodiments may be configured such that a length of the segments of fibers may be adjusted. For illustration, the cutter system may be configured to set the lengths of the segments cut from the at least one yarn to different values for different seat cushion bodies. The apparatus may also be configured such that the length of the segments cut from the at least one yarn may be varied within one batch. The length of the segments cut from the at least one yarn may be varied in dependence on a filling level of the fiber material in the mold. Gradients in fiber length may thus be established in the seat cushion body.

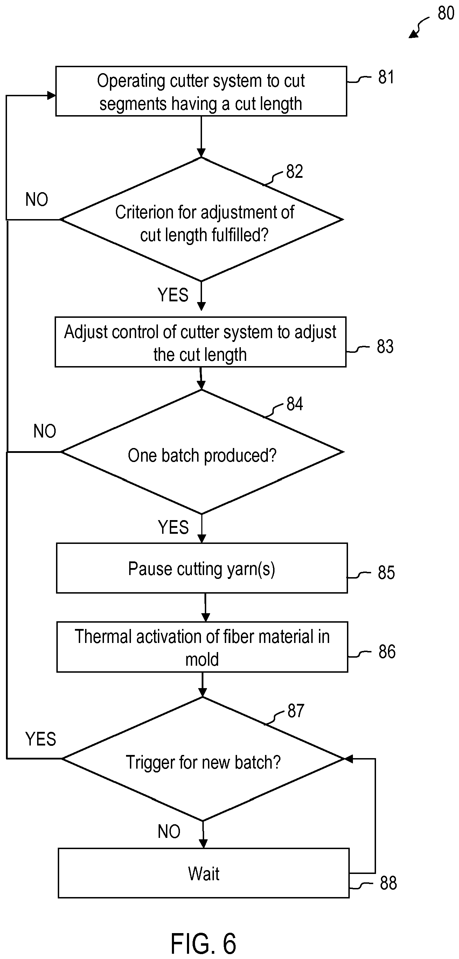

FIG. 6 is a flow chart of a method 80 according to an embodiment. The method 80 may be performed by the apparatus according to an embodiment.

At 81, the cutter system is operated to cut segments from one or several yarns. The segments of yarn may be opened to individual segments of filaments.

At 82, it is determined whether a criterion for adjusting a cut length at which the segments of yarn are cut is to be adjusted. The criterion may depend on a filling level of the fiber material in the mold. The cut length may be adjusted when the filling level reaches a threshold. An adjustment of the cut length may be made when the filling level reaches any one of several thresholds. For illustration, longer fibers may be used for a central portion of the seat cushion body, while shorter fibers may be used for portions of the seat cushion body which are located closer to a surface. If it is determined that the cut length is not to be adjusted, the cutter system may continue to cut segments having the previously used cut length at 81.

At 83, if it is determined that the cut length is to be adjusted, the control of the cutter system is adjusted to vary the cut length. The speed at which the yarns are fed to the cutters may be increased to reduce the cut length and/or may be decreased to increase the cut length. The rotation speed of the cutting blades may be decreased to reduce the cut length and/or may be increased to increase the cut length.

At 84, it is determined whether one batch has been produced. If the amount of fiber material is still less than the amount required for one batch, the method may return to 81. The cut length may be adjusted again at 83, if required.

At 85 and 86, the feed of yarn may be temporarily stopped when one batch has been produced, as explained with reference to FIG. 2.

At 87, a trigger for producing a new batch of fiber material is monitored. If the trigger is not detected, the monitoring for the trigger may be continued after a wait time 88. If the trigger is detected, the method may return to step 81 to produce a new batch.

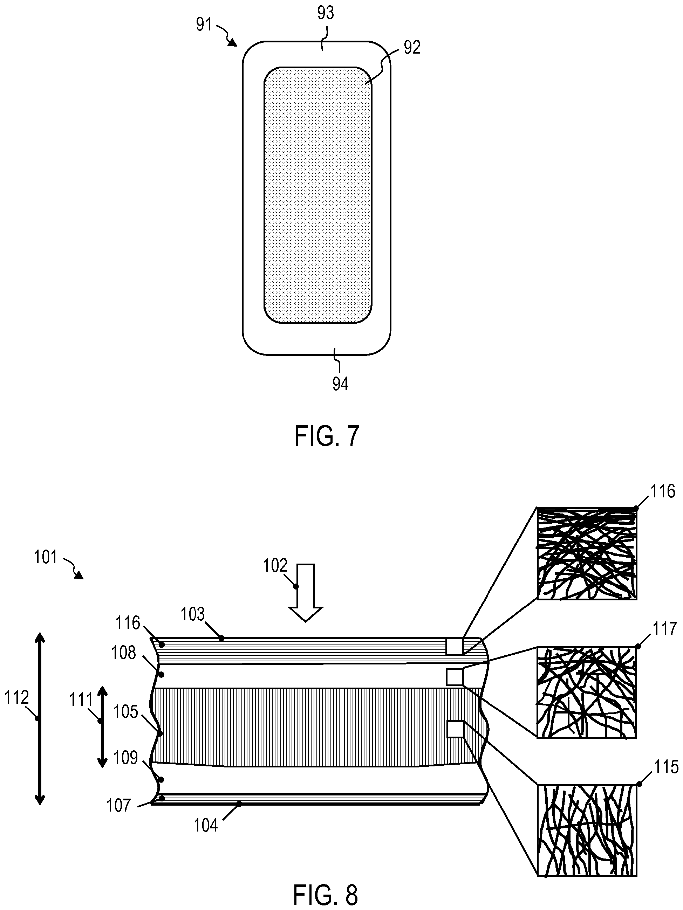

FIG. 7 is a cross-sectional view of a seat cushion body 91 formed from the fiber material produced by cutting yarns. The seat cushion body 91 may have a central portion 92 and boundary portions 93, 94. The boundary portions 93, 94 may have exposed surfaces. The lengths of the binding fibers and matrix fibers may be set to different values for the central portion 92 and the boundary portions 93, 94. For illustration, the central portion 92 may be formed of fibers having a first length, and the boundary portions 93, 94 may be formed of fibers having a second length which is shorted than the first length. The cut length of the yarn segments cut from the yarns may be adjusted as the fiber material is inserted into the mold, in order to produce the variation in fiber length.

The fiber lengths may be set in dependence on the function of the fibers in the seat cushion body 91. For illustration, the central portion 92 may provide resilient characteristics. The fibers in the central portion 92 may be predominantly oriented along a main load direction of the seat cushion body. The fibers in the boundary portions 93, 94 may be formed from filament segments cut from the yarns which have a shorter length, so as to provide a more homogenous feeling and touch at the surfaces of the seat cushion body.

In the apparatus and method according to embodiments, the fiber material may be filled into the mold as loose fiber material produced by cutting yarns into segments. The fiber material may be heated by vapor, warm gases or in other ways to thermally activate the binding fibers and form the seat cushion body as an integral body. The seat cushion body may be formed such that it does not have any sharp zone boundaries at which pre-fabricated layers of fiber material abut on each other. The seat cushion body may be formed such that it has gradual variations in fiber orientation and/or fiber density.

FIG. 8 is a detailed cross-sectional view through a seat cushion body 101 produced by an apparatus or method according to an embodiment. The cross-sectional view of Fig. 8 is taken along a plane which is perpendicular to major faces of the seat cushion body 101 and parallel to a main load direction of the seat cushion body 101. The seat cushion body 101 is configured to provide resilient characteristics when a force directed along a main load direction 102 is exerted onto the seat cushion body 101.

The seat cushion body 101 has two major faces 103, 104 which are arranged so as to be opposite to each other on the seat cushion body 101. The major faces 103, 104 may have an approximately planar shape, extending essentially perpendicularly to the main load direction 102. The seat cushion body 101 may be configured such that the main load direction 102 defines a normal to the plane of the major faces 103 and 104. Protrusions or recesses (not shown in FIG. 8) may be provided on the major faces to define attachment regions for structural or functional seat components.

The seat cushion body 101 is a unitary body which is integrally formed from thermally cross-linked fibers. The fiber material forming the seat cushion body may include at least two different types of fibers, namely a binding fiber and a matrix fiber. The binding fiber and the matrix fiber may be produced by cutting yarns into segments. The binding fiber is a fiber which can be thermally activated by supplying heat thereto. Upon thermal activation, at least a portion of each binding fiber melts, thereby causing a matrix of fibers to form. Various known fiber types may be used as binding and matrix fibers. The fiber material from which the seat cushion body is formed may include fibers that can be obtained from recycling material and/or which can be recycled in an efficient manner. The binding fibers may be bi-component (BiCo) fibers. The binding fibers may have a thermal activation temperature which is lower than a melting temperature of the matrix fibers. According to exemplary embodiments, the binding fibers may be BiCo fibers having a core of polyester or polyamide, and having a coating of polyamide or modified polyester. The BiCo fibers may have a trilobal shape in cross-section. The matrix fibers may be formed from polyester or polyamide and have a melting temperature higher than at least the melting temperature of the coating of the binding fibers. The matrix fibers may have a linear mass density of preferably in between 10 and 100 dtex. The binding fibers may have a preferred linear mass density of in between 7 and 40 dtex. The fiber material from which the seat cushion body is formed may include more than one type of matrix fiber and/or more than one type of binding fiber.

The seat cushion body 101 includes a plurality of different portions 105-107. The portions are distinguished from each other with regard to a characteristic fiber orientation and/or a density of the seat cushion body 101 and/or the average fiber length. There are no sharp boundaries between the different portions. Rather, the seat cushion body 101 exhibits gradual transitions in fiber orientation and/or seat cushion body density between the different portions. The seat cushion body 101 is distinguished from bodies which are formed by fusing pre-formed perpendicular laid fiber sheets inter alia in that it does not include sharp zone boundaries, which enhances durability and comfort.

The seat cushion body 101 has a resilient portion 105. The resilient portion 105 has a fiber orientation corresponding to the main load direction 102 of the seat cushion body. I.e., the preferential direction of the fibers in the resilient portion corresponds to the main load direction 102 and is perpendicular to at least one major face 103 of the seat cushion body 101. Due to the formation of the fiber matrix, fiber shapes and statistical distributions in fiber orientation, not all fiber fibers will be directed along the main load direction 102 in the resilient portion. The resilient portion 105 may be considered to have a fiber orientation along the main load direction 102 if more than 50% of the fibers are respectively oriented at an angle of less than 45° to the main load direction 102. In other words, in the resilient portion 105, the majority of fibers is disposed at angle of more than 45° relative to the plane of the major face 103.

The fiber configuration in the resilient portion 105 is schematically indicated at the inset 115. As seen in the inset 115, a majority of the fibers in the resilient portion 105 may be oriented at an angle of less than 45° to the main load direction, and the fiber spacing may be sufficiently large so as to allow the fibers to deflect when a load is directed along the main load direction 102. Cross-linking fibers, which interconnect the fibers which are mainly disposed parallel to the main load direction 102, allow a fiber matrix to be formed in the resilient portion 105.

The seat cushion body 1 may include further portions 106, 107 disposed at the major faces 103 and 104, respectively. The further portions 106 and 107, respectively, are distinguished from the resilient portion 105 with regard to at least one of fiber orientation or seat cushion body density. In the seat cushion body 101 of FIG. 8, the fibers in the further portions 106 and 107 respectively have a preferential direction parallel to the plane of the major face at which they are disposed. The density of the seat cushion body at the major faces 103 or 104 may be greater than a density in the resilient portion 105. An average length of the fibers in the further portions 106 and 107 may be different from an average length of the fibers in the resilient portion 105.

The fiber configuration in the further portion 106 disposed at the major face 103 is schematically indicated at the inset 116. As seen in the inset 116, a majority of the fibers in the further portion 106 may be oriented at an angle of less than 45° to the plane of the major face 103, and the fibers may have a packing density greater than in the resilient portion 105. The fibers in the further portion 106 may have an average length which is shorted than an average length of the fibers in the resilient portion 105. The further portion 107 disposed on the other major face 104 may have a configuration, with regard to fiber orientation and seat cushion body density, which is similar to the one of the portion 106.

As has been indicated above, the seat cushion body 101 may be formed in a unitary manner by the apparatus and methods according to embodiments. The seat cushion body 101 may be formed such that there are gradual transitions in fiber orientation and density between the resilient portion 105 and the further portions 106 and 107, respectively. The seat cushion body 101 may include a transition portion 108 which is disposed in between the resilient portion 105 and the further portion 106 on the major face 103. In the transition portion 108, the fiber orientation varies gradually from the fiber orientation of the resilient portion 105 to the fiber orientation of the further potion 106 on the major face 103, and the density of the cushion body varies gradually from the density of the resilient portion to the density of the further portion 106 on the major face 103. The fiber configuration in the resilient portion 108 is schematically indicated at the inset 117.

The seat cushion body 101 includes a transition portion 109 which is disposed in between the resilient portion 105 and the further portion 107 on the major face 104. In the transition portion 109, the fiber orientation varies gradually from the fiber orientation of the resilient portion 105 to the fiber orientation of the further potion 107 on the major face 104, and the density of the cushion body varies gradually from the density of the resilient portion 105 to the density of the further portion 107 on the major face 104.

The seat cushion body 101 may be formed in a unitary manner from the fiber material which includes binding and matrix fibers. While the seat cushion body 101 has portions distinguished from each other with regard to fiber orientation and/or seat cushion body density, the seat cushion body 101 is homogeneous in the sense that there are no sharp zone boundaries between portions of different fiber orientation and/or seat cushion body density. The seat cushion body 101 thus formed as a unitary body has a height 112 which may be greater than 4 cm. The resilient portion 105 having a height 111 may be disposed so as to be spaced from both major faces 103 and 104.

Fibers may extend between the different portions of the seat cushion body. For illustration, at least the matrix fibers may have a length of preferably more than 15 mm. For further illustration, at least the matrix fibers may have a length of preferably less than or equal to 35 mm. At least some of the fibers may extend from the resilient portion 105 into the further portion 106 on the major face 103 or into the further portion 107 on the major face 104.

In the seat cushion body 101, the resilient portion 105 having the fiber orientation along the main load direction 102 provides good ventilation and resiliency. With the seat cushion body 101 being formed in a unitary manner from thermally cross-linked fibers, good durability and comfort are attained.

While apparatuses and method according to embodiments have been described in detail, alterations and modifications may be implemented in further embodiments. For illustration, while a transport system which transports the fiber material by generating a gas flow may be used to transport the fiber material away from the cutter system and into the mold, the transport system may also be implemented in other ways. For illustration, one or several conveyor belts may be provided which remove the fiber material from the cutter system and convey it towards the mold.

While methods of producing a seat cushion body have been described in which the fibers are oriented after insertion into the mold, fibers oriented along a preferential direction may also be formed prior to inserting the fibers into the mold. The fibers may be inserted into the mold such that their preferential direction corresponds to the main load direction of the seat cushion body formed within the mold. I.e., the fibers may be transferred such that their preferential direction is perpendicular to the major faces defined by the inner surfaces of the mold.

The apparatuses and methods according to embodiments may be used for producing seat cushion which may be integrated into a wide variety of seats. Exemplary seats in which the seat cushion bodies may be used include automobile seats, train seats, aircraft seats, seats for home use and seats for office use. The seat cushion bodies according to various embodiments may further be used on various components of the seat. For illustration, a seat cushion body may be used at a seat portion which receives a person's thighs, at a backrest portion supporting a person's back, or at a headrest portion or other component where cushioning is desired.

## Claims

1. An apparatus for producing a seat cushion body (91; 101) from a fiber material, the apparatus comprising:
a cutter system (20) configured to cut at least one yarn (51, 52) to produce the fiber material, wherein the cutter system (20) is configured to cut the at least one yarn (51, 52) to produce matrix fibers and binding fibers, said binding fibers being thermally activated in a mold, in which they at least partially melt and form an integral cushion body of thermally cross-linked fibers, and
a transport system (30) configured to transport the fiber material from the cutter system (20) to the mold (40), wherein the at least one yarn (51, 52) comprises a first filament (71; 71, 75) and a second filament (72; 72, 76), and
the cutter system is configured to produce segments of the first filament (71; 71, 75) and segments of the second filament (72; 72, 76) by cutting the at least one yarn (51, 52) to produce the matrix fibers and the binding fibers.

2. The apparatus according to claim 1,
wherein the first filament (71; 71, 75) and the second filament (72; 72, 76) are distinguished from each other in at least one of:
material;
diameter; or
cross-sectional shape.

3. The apparatus according to any one of the preceding claims,
wherein the cutter system (20) is configured to cut the at least one yarn (51, 52) into segments of at least two different lengths to produce the fiber material.

4. The apparatus according to any one of the preceding claims,
wherein the transport system (30) is configured to generate a gas stream (36-38) which transports the fiber material away from the cutter system (20).

5. The apparatus according to claim 4,
wherein the transport system (30) is configured to separate filaments of a yarn segment cut from the at least one yarn (51) in the gas stream (36-38).

6. The apparatus according to claim 4 or claim 5,
wherein the transport system (30) is configured to generate the gas stream (36-38) such that it flows from the cutter system (20) into the mold (40).

7. The apparatus according to any one of claims 4 to 6,
wherein the transport system (30) is configured to orient the fiber material in the mold by controlling the air stream.

8. The apparatus according to any one of the preceding claims, further comprising:
a control device (26) configured to control the cutter system (20) to produce the fiber material in batches.

9. The apparatus according to claim 8,
wherein a batch of the fiber material corresponds to an amount of fiber material inserted into the mold (40) to form one seat cushion body (91; 101).

10. The apparatus according to claim 8 or claim 9,
wherein the control device (26) is configured to temporarily prevent the cutter system (20) from cutting the at least one yarn (51, 52) after a batch of the fiber material has been produced by the cutter system (20).

11. The apparatus according to any one the preceding claims, further comprising:
a heating system configured to heat the fiber material in the mold (40) to thermally activate at least a portion of the fibers of the fiber material.

12. A method of producing a seat cushion body from fiber material, the method comprising:
cutting at least one yarn (51, 52) by a cutter system (20) to produce the fiber material, wherein the step of cutting the at least one yarn (51, 52) comprises cutting the at least one yarn (51, 52) to produce matrix fibers and binding fibers, said binding fibers being thermally activated in a mold, in which they at least partially melt and form an integral cushion body of thermally cross-linked fibers and transporting the fiber material from the cutter system (20) to the mold (40) wherein the at least one yarn (51, 52) comprises a first filament (71; 71, 75) and a second filament (72; 72, 76), and
the step of cutting the at least one yarn (51, 52) comprises producing segments of the first filament (71; 71, 75) and segments of the second filament (72; 72, 76) by cutting the at least one yarn (51, 52) to produce the matrix fibers and the binding fibers.

13. The method of claim 12,
which is performed by the apparatus (1) according to any one of claims 1 to 11.

## Patentansprüche

1. Vorrichtung zum Herstellen eines Sitzkissenkörpers (91; 101) aus einem Fasermaterial, wobei die Vorrichtung umfasst:
ein Schneidsystem (20), welches dazu eingerichtet ist, zumindest einen Garn (51, 52) zu schneiden, um das Fasermaterial herzustellen, wobei das Schneidsystem (20) dazu eingerichtet ist, den zumindest einen Garn (51, 52) zu schneiden, um Matrixfasern und Bindefasern herzustellen, wobei die Bindefasern in einem Formwerkzeug, in welchem sie zumindest teilweise schmelzen und einen einstückigen Kissenkörper aus thermisch vernetzten Fasern bilden, thermisch aktiviert werden, und
ein Transportsystem (30), welches dazu eingerichtet ist, das Fasermaterial von dem Schneidsystem (20) zu dem Formwerkzeug (40) zu transportieren,
wobei der zumindest eine Garn (51, 52) ein erstes Filament (71; 71, 75) und ein zweites Filament (72; 72, 76) umfasst, und
das Schneidsystem dazu eingerichtet ist, durch ein Schneiden des zumindest einen Garns (51, 52) Segmente des ersten Filaments (71; 71, 75) und Segmente des zweiten Filaments (72; 72, 76) herzustellen, um die Matrixfasern und die Bindefasern herzustellen.

2. Vorrichtung gemäß Anspruch 1,
wobei sich das erste Filament (71; 71, 75) und das zweite Filament (72; 72, 76) voneinander unterscheiden in zumindest einem aus:
Material;
Durchmesser; oder
Querschnittsform.

3. Vorrichtung gemäß einem jeden der vorhergehenden Ansprüche,
wobei das Schneidsystem (20) dazu eingerichtet ist, den zumindest einen Garn (51, 52) in Segmente von zumindest zwei verschiedenen Längen zu schneiden, um das Fasermaterial herzustellen.

4. Vorrichtung gemäß einem jeden der vorhergehenden Ansprüche,
wobei das Transportsystem (30) dazu eingerichtet ist, einen Gasstrom (36-38) zu erzeugen, welcher das Fasermaterial von dem Schneidsystem (20) wegtransportiert.

5. Vorrichtung gemäß Anspruch 4,
wobei das Transportsystem (30) dazu eingerichtet ist, aus dem zumindest einen Garn (51) geschnittene Filamente eines Garnsegments in dem Gasstrom (36-38) voneinander zu trennen.

6. Vorrichtung gemäß Anspruch 4 oder Anspruch 5,
wobei das Transportsystem (30) dazu eingerichtet ist, den Gasstrom (36-38) so zu erzeugen, dass er von dem Schneidsystem (20) in das Formwerkzeug (40) fließt.

7. Vorrichtung gemäß einem jeden der Ansprüche 4-6,
wobei das Transportsystem (30) dazu eingerichtet ist, das Fasermaterial in dem Formwerkzeug durch Steuern des Luftstroms auszurichten.

8. Vorrichtung gemäß einem jeden der vorhergehenden Ansprüche, ferner umfassend:
eine Steuereinrichtung (26), welche dazu eingerichtet ist, das Schneidsystem (20) zu steuern, um das Fasermaterial in Losen herzustellen.

9. Vorrichtung gemäß Anspruch 8,
wobei ein Los des Fasermaterials einer in das Formwerkzeug (40) eingeführten Menge von Fasermaterial entspricht, um einen Sitzkissenkörper (91; 101) auszubilden.

10. Vorrichtung gemäß Anspruch 8 oder Anspruch 9,
wobei die Steuereinrichtung (26) dazu eingerichtet ist, das Schneidsystem (20) temporär am Schneiden des zumindest einen Garns (51, 52) zu hindern, nachdem ein Los des Fasermaterials durch das Schneidsystem (20) hergestellt wurde.

11. Vorrichtung gemäß einem jeden der vorhergehenden Ansprüche, ferner umfassend:
ein Heizsystem, welches dazu eingerichtet ist, das Fasermaterial in dem Formwerkzeug (40) zu beheizen, um zumindest einen Teil der Fasern des Fasermaterials thermisch zu aktivieren.

12. Verfahren zum Herstellen eines Sitzkissenkörpers aus Fasermaterial, wobei das Verfahren umfasst:
Schneiden zumindest eines Garns (51, 52) durch ein Schneidsystem (20) zum Herstellen des Fasermaterials, wobei der Schritt des Schneidens des zumindest einen Garns (51, 52) ein Schneiden des zumindest einen Garns (51, 52) umfasst, um Matrixfasern und Bindefasern herzustellen, wobei die Bindefasern in einem Formwerkzeug, in welchem sie zumindest teilweise schmelzen und einen einstückigen Kissenkörper aus thermisch vernetzten Fasern bilden, thermisch aktiviert werden, und
Transportieren des Fasermaterials von dem Schneidsystem (20) zu dem Formwerkzeug (40), wobei der zumindest eine Garn (51, 52) ein erstes Filament (71; 71, 75) und ein zweites Filament (72; 72, 76) umfasst, und
der Schritt des Schneidens des zumindest einen Garns (51, 52) ein Herstellen von Segmenten des ersten Filaments (71; 71, 75) und Segmenten des zweiten Filaments (72; 72, 76) durch ein Schneiden des zumindest einen Garns (51, 52) umfasst, um die Matrixfasern und die Bindefasern herzustellen.

13. Verfahren gemäß Anspruch 12,
welches durch die Vorrichtung (1) gemäß einem jeden der Ansprüche 1-11 ausgeführt wird.

## Revendications

1. Appareil pour produire un corps de coussin de siège (91 ; 101) à partir d'un matériau fibreux, l'appareil comprenant :
un système de coupe (20) configuré pour couper au moins un fil (51, 52) pour produire le matériau fibreux, dans lequel le système de coupe (20) est configuré pour couper l'au moins un fil (51, 52) pour produire des fibres matricielles et des fibres de liaison, lesdites fibres de liaison étant activées thermiquement dans un moule, dans lequel elles fondent au moins partiellement et forment un corps de coussin intégral de fibres réticulées thermiquement, et
un système de transport (30) configuré pour transporter le matériau fibreux du système de coupe (20) au moule (40),
dans lequel
l'au moins un fil (51, 52) comprend un premier filament (71 ; 71, 75) et un second filament (72 ; 72, 76), et
le système de coupe est configuré pour produire des segments du premier filament (71 ; 71, 75) et des segments du second filament (72 ; 72, 76) en coupant l'au moins un fil (51, 52) pour produire les fibres matricielles et les fibres de liaison.

2. Appareil selon la revendication 1,
dans lequel le premier filament (71 ; 71, 75) et le second filament (72 ; 72, 76) se distinguent l'un de l'autre par au moins l'un parmi :
un matériau ;
un diamètre ; ou
une forme de section transversale.

3. Appareil selon l'une quelconque des revendications précédentes,
dans lequel le système de coupe (20) est configuré pour couper l'au moins un fil (51, 52) en segments d'au moins deux longueurs différentes pour produire le matériau fibreux.

4. Appareil selon l'une quelconque des revendications précédentes,
dans lequel le système de transport (30) est configuré pour générer un flux de gaz (36-38) qui transporte le matériau fibreux à distance du système de coupe (20).

5. Appareil selon la revendication 4,
dans lequel le système de transport (30) est configuré pour séparer des filaments d'un segment de fil coupé de l'au moins un fil (51) dans le flux de gaz (36-38).

6. Appareil selon la revendication 4 ou la revendication 5,
dans lequel le système de transport (30) est configuré pour générer le flux de gaz (36-38) de sorte qu'il s'écoule depuis le système de coupe (20) dans le moule (40).

7. Appareil selon l'une quelconque des revendications 4 à 6,
dans lequel le système de transport (30) est configuré pour orienter le matériau fibreux dans le moule en commandant le flux d'air.

8. Appareil selon l'une quelconque des revendications précédentes, comprenant en outre :
un dispositif de commande (26) configuré pour commander le système de coupe (20) pour produire le matériau fibreux par lots.

9. Appareil selon la revendication 8,
dans lequel un lot du matériau fibreux correspond à une quantité de matériau fibreux insérée à l'intérieur du moule (40) pour former un corps de coussin de siège (91 ; 101).

10. Appareil selon la revendication 8 ou la revendication 9,
dans lequel le dispositif de commande (26) est configuré pour empêcher temporairement le système de coupe (20) de couper l'au moins un fil (51, 52) après qu'un lot du matériau fibreux a été produit par le système de coupe (20).

11. Appareil selon l'une quelconque des revendications précédentes, comprenant en outre :
un système de chauffage configuré pour chauffer le matériau fibreux dans le moule (40) pour activer thermiquement au moins une partie des fibres du matériau fibreux.

12. Procédé de production d'un corps de coussin de siège à partir d'un matériau fibreux, le procédé comprenant .
la coupe d'au moins un fil (51, 52) par un système de coupe (20) pour produire le matériau fibreux, dans lequel l'étape de coupe de l'au moins un fil (51, 52) comprend la coupe de l'au moins un fil (51, 52) pour produire des fibres matricielles et des fibres de liaison, lesdites fibres de liaison étant activées thermiquement dans un moule, dans lequel elles fondent au moins partiellement et forment un corps de coussin intégral de fibres réticulées thermiquement et
le transport du matériau fibreux du système de coupe (20) au moule (40)
dans lequel
l'au moins un fil (51, 52) comprend un premier filament (71 ; 71, 75) et un second filament (72 ; 72, 76), et
l'étape de coupe de l'au moins un fil (51, 52) comprend la production de segments du premier filament (71 ; 71, 75) et des segments du second filament (72 ; 72, 76) par la coupe de l'au moins un fil (51, 52) pour produire les fibres matricielles et les fibres de liaison.

13. Procédé selon la revendication 12,
qui est réalisé par l'appareil (1) selon l'une quelconque des revendications 1 à 11.
